# EUROPÄISCHE PATENTSCHRIFT

(11) **EP 1 271 204 B1**
(45) Veröffentlichungstag und Bekanntmachung des Hinweises auf die Patenterteilung: **23.03.2005**
(21) Anmeldenummer: 01115880.5
(22) Anmeldetag: 29.06.2001
(51) Int. Cl.: G02B 6/38

(54) **Buchsenteil und Steckerteil für eine optische Steckverbindung**
Socket and plug for an optical connector
Prise mâle et femelle pour un connecteur optique

(43) Veröffentlichungstag der Anmeldung: 02.01.2003
(73) Patentinhaber: Diamond SA, 6616 Losone (CH)
(72) Erfinder: De Marchi, Silverio, 6612 Ascona (IT)
(74) Vertreter: Wenger, René

(56) Entgegenhaltungen:
- EP-A- 0 729 048
- EP-A- 0 788 002
- EP-A- 0 893 716
- EP-A- 0 962 799
- EP-A- 1 004 911
- EP-A- 1 072 918
- US-A- 5 579 425
- US-A- 5 883 995
- US-B1- 6 179 477

## Beschreibung

Die Erfindung betrifft ein Steckerteil für eine optische Steckverbindung gemäss dem Oberbegriff von Anspruch 1. Steckerteile der genannten Art bilden gemeinsam mit einem Buchsenteil eine optische Steckverbindung, in welcher Licht mit einer möglichst geringen Übertragungsdämpfung übertragbar ist. Das Buchsenteil kann dabei entweder ein Steckerpaar aufeinander zentrieren oder es kann einen einseitig eingesteckten Stecker auf ein optisches Element wie z.B. einen Lichtempfänger oder einen Lichtsender ausrichten.

An optische Steckverbindungen werden immer höhere Anforderungen gestellt. Einerseits ist ähnlich wie bei elektronischen Komponenten eine ständige Miniaturisierung gefordert, wobei aber trotzdem noch eine manuelle Handhabung gewährleistet sein muss. Andererseits darf diese Miniaturisierung die Montage nicht erschweren und verteuern und die Steckverbindung sollte aus herstellungstechnischen Gründen möglichst wenig Einzelteile aufweisen.

Aus US A 5 579 425 ist beispielsweise ein Duplex-Steckerteil bekannt, welches aus einem Paar Einzel-Steckerteilen zusammengesetzt ist, wobei dazwischen ein zusätzliches Griffstück angeordnet ist. Damit können die beiden einstück mit den Steckergehäusen ausgebildeten Verriegelungselemente gleichzeitig betätigt werden.

Eine gattungsmässig vergleichbare Steckverbindung ist beispielsweise durch EP A 1 072 918 bekannt geworden. Diese erfüllt alle heute gestellten Anforderungen wie z.B. zugfeste Verriegelung des Steckerteils im Buchsenteil, mit einem Schutzdeckel geschützte Stirnseite des Steckerstifts, abgeblendete Einstecköffnungen und vieles mehr. In der Praxis hat es sich jedoch gezeigt, dass Herstellung und Montage nach wie vor mit einem grossen Aufwand verbunden sind und dass je nach Einsatzzweck die Handhabung des Steckers schwierig ist.

Es ist daher eine Aufgabe der Erfindung ein Steckerteil der eingangs genannten Art zu schaffen, um eine optische Steckverbindung mit wenigen Bauteilen und geringem Montageaufwand herzustellen, die sich trotz Miniaturisierung gut handhaben lässt. Diese Aufgabe wird durch ein Steckerteil gelöst, das die Merkmale im Anspruch 1 aufweist.

Das auf das Verriegelungselement aufschnappbare separate Griffstück vereinfacht die Handhabung des Steckerteils wesentlich und der Montageaufwand ist gering. Das separate Griffstück kann zusätzlich noch zur Codierung des Steckerteils eingesetzt werden, beispielsweise durch den Einsatz unterschiedlicher Farben. Da das Verriegelungselement senierseits auf das Steckergehäuse aufschnappbar ist, erfolgt die gesamte Montage durch einzelne Schnappverbindungen.

Das Verriegelungselement kann als Biegeteil aus Metall und das Griffstück aus Kunststoffmaterial ausgebildet sein. Griffstücke unterschiedlicher Farben lassen sich dabei kostengünstig im Spritzgussverfahren herstellen.

Das Griffstück übergreift das Verriegelungselement teilweise und kann an seitlichen Schnappnocken hinter Kanten des Verriegelungselements verankert sein. Auch druckknopfartige Schnappverbindungen wären jedoch denkbar.

Eine Duplex-Steckereinheit kann besonders vorteilhaft dadurch gebildet werden, dass wenigstens zwei Steckerteile mit einem Verbindungselement in einer etwa parallel nebeneinander verlaufenden Lage zusammengehalten sind und dass auf die Verriegelungselemente der beiden Steckerteile ein gemeinsames Griffstück aufschnappbar ist.

Weitere, Ausführungsformen des Steckerteils werden in den Ansprüchen 4 und 5 definiert.

Das Steckerteil wird vorteilhaft in einer optischen Steckverbindung eingesetzt, welche die Merkmale im Anspruch 7 aufweist.

Die Ausbildung der Schutzklappe als Biegeteil aus Metall, das gelenkig am Buchsengehäuse eingeschnappt ist, erübrigt den Einsatz der bisher üblichen Achse zum Anlenken der Schutzklappe. Damit fällt nicht nur ein schwer zu handhabendes Bauteil weg, sondern die Montage wird wesentlich erleichtert.

Die Schutzklappe kann dabei an einem Gelenklager angelenkt sein, das ein Paar Gelenknocken und Gelenkpfannen aufweist. Die Gelenknocken können dabei an seitlichen, zur Ebene der Schutzklappe abgewinkelten Flügeln angeordnet sein. Die Gelenkpfannen werden vorteilhaft durch Öffnungen im Buchsengehäuse gebildet, welche durchgehend sind. Auf diese Weise können am gleichen Buchsengehäuse auch noch konventionelle Schutzklappen mit separaten Achsen angelenkt werden bzw. an bestehenden Buchsenteilen können diese konventionellen Schutzklappen gegen erfindungsgemässe ausgetauscht werden.

Weitere Vorteile können erreicht werden, wenn die Schliessfeder eine einstückig mit der Schutzklappe ausgebildete Blattfeder ist, die sich am Boden des Buchsengehäuses abstützt. Dadurch fällt eine zusätzliche Schraubendrehfeder zum Aufbringen der Federkraft weg.

Wenn die Blattfeder wenigstens im Bereich der Abstützung in zwei separate Federzungen aufgeteilt ist, kann die gewünschte Federkraft je nach der gewählten Breite der Zungen relativ fein eingestellt werden. Die entspannte Blattfeder kann dabei in einem Winkel von 10° bis 20°, vorzugsweise von etwa 15° zur Schutzklappe geneigt sein, wobei die Abstützung nahe der Schwenkachse erfolgt. Auf diese Weise beansprucht die Blattfeder wenig Raum.

Das Buchsenteil kann durch eine zusätzliche Massnahme besonders vorteilhaft in einer optischen Steckverbindung eingesetzt werden, welche die Aufnahme unterschiedlicher Kategorien von Stekkerteilen erlaubt, bei denen im Steckergehäuse ein Steckerstift gehalten ist, der über die Stirnseite des Steckergehäuses hinausragt. Zu diesem Zweck ist zur Vermeidung einer Kollision mit dem Steckerstift beim Einstecken des Steckerteils in das Buchsenteil in der Schutzklappe eine gegen das Innere des Buchsengehäuses gerichtete Ausbuchtung angeordnet. Bei Steckerteilen, deren Stirnseite nicht durch einen Schutzdeckel geschützt ist, wird dabei verhindert, dass die Stirnseite des Steckerstifts auf der Schutzklappe aufläuft, bevor diese Zurückgeschwenkt wird. Dabei ist es zweckmässig, wenn die Ausbuchtung breiter ist als der Durchmesser des Steckerstifts, jedoch schmaler als die Stirnseite des Steckergehäuses. Die Tiefe der Ausbuchtung ist so dimensioniert, dass die Stirnseite des Steckerstifts die Oberfläche der Schutzklappe nie berührt und das Letztere durch die Stirnseite des Steckergehäuses aufgestossen wird.

Ausführungsbeispiele der Erfindung sind in den Zeichnungen dargestellt und werden nachstehend genauer beschrieben. Es zeigen:
- Figur 1: eine perspektivische Darstellung einer optischen Steckverbindung bestehend aus einem Buchsenteil und einem Steckerteil,
- Figur 2: eine perspektivische Darstellung des Buchsenteils gemäss Figur 1 in demontiertem Zustand,
- Figur 3: ein Querschnitt durch das Buchsenteil gemäss Figur 1 mit einer geöffneten und einer geschlossenen Schutzklappe,
- Figur 4: eine perspektivische Draufsicht auf eine Schutzklappe,
- Figur 5: eine perspektivische Unteransicht der Schutzklappe gemäss Figur 4,
- Figur 6: ein Querschnitt durch eine Schutzklappe bei der Montage im Buchsengehäuse,
- Figur 7: die Schutzklappe gemäss Figur 6 in eingerasteter Position,
- Figur 8: ein Querschnitt durch die Gehäusehälfte eines Buchsenteils beim Einstecken eines Steckerteils,
- Figur 9: die Gehäusehälfte gemäss Figur 8 mit teilweise geöffneter Schutzklappe und teilweise geöffnetem Schutzdeckel am Steckerteil,
- Figur 10: die Gehäusehälfte gemäss Figur 8 mit vollständig eingestecktem und verankertem Steckerteil,
- Figur 11: ein Querschnitt durch die Gehäusehälfte gemäss Figur 8 beim Einstecken einer zweiten Kategorie von Steckerteilen ohne Schutzdeckel an der Stirnseite,
- Figur 12: eine perspektivische Gesamtdarstellung eines Steckerteils mit Einzeldarstellung bestimmter Komponenten,
- Figur 13: eine perspektivische Darstellung eines Duplexsteckers vor der Montage,
- Figur 14: der montierte Duplexstecker gemäss Figur 13, und
- Figur 15: eine perspektivische Darstellung eines Duplexbuchsenteils.

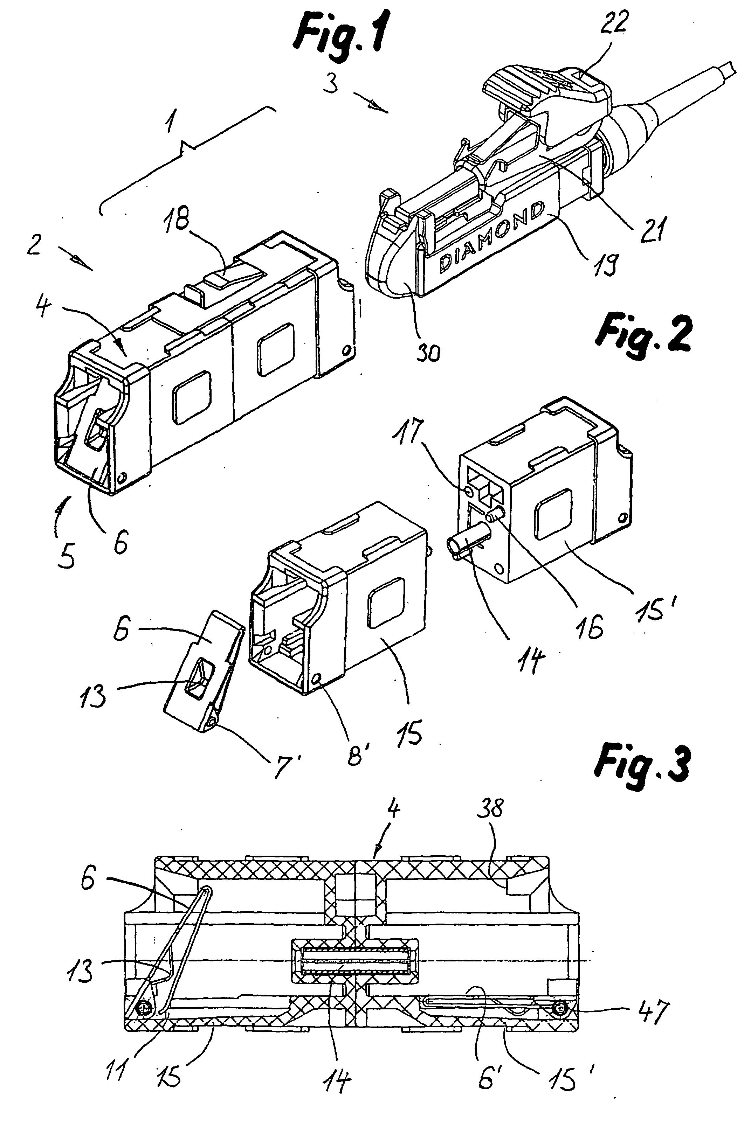

Wie in Figur 1 dargestellt, besteht eine insgesamt mit 1 bezeichnete optische Steckverbindung aus wenigstens einem Buchsenteil 2 und wenigstens einem Steckerteil 3. Das dargestellte Buchsenteil ist als sogenanntes Mittelteil ausgebildet, das beispielsweise mit Hilfe eines schnappbaren Befestigungsbügels 18 an einer Gerätewand fixiert werden kann und das auf beiden Seiten eine Einstecköffnung 5 aufweist, in welche ein gleichartiges Steckerteil einsteckbar ist. Jede Einstecköffnung oder gegebenenfalls auch nur eine davon ist mit einer Schutzklappe 6 verschlossen, welche durch die Einsteckkraft beim Einstecken des Steckerteils 3 zurückschwenkt und die Einstecköffnung freigibt.

Wie aus Figur 2 ersichtlich ist, besteht das Buchsenteil 2 aus einem Buchsengehäuse 4, das vorteilhaft zwei identische Gehäusehälften 15, 15' aufweist. Die Gehäusehälften sind hermaphroditisch ausgebildet, sodass sie an Bolzen 16 bzw. Öffnungen 17 zusammengesetzt und beispielsweise verklebt werden können. Die beiden Gehäusehälften schliessen dabei eine schwimmend gelagerte Zentrierhülse 14 ein, in welche die Steckerstifte der eingesteckten Steckerteile aufeinander zentriert werden.

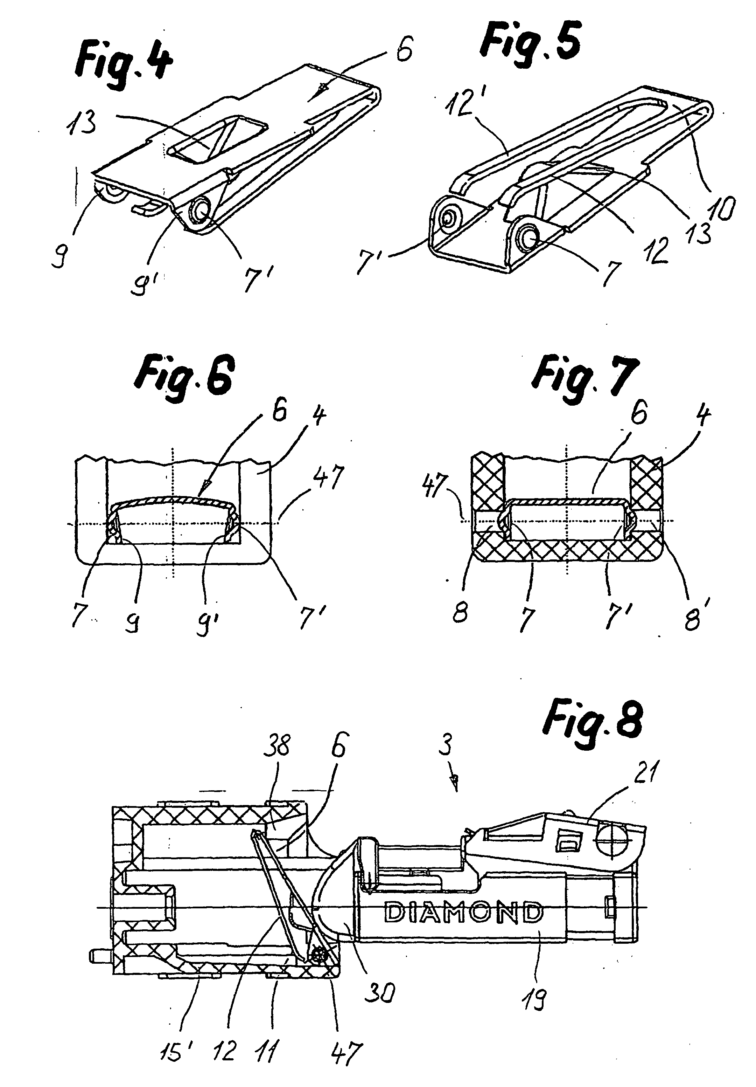

Jede Schutzklappe 6, 6' ist um eine Schwenkachse 47 schwenkbar gelagert. Einzelheiten zur Konfiguration der Schutzklappe bzw. zur Gelenklagerung sind aus den Figuren 4 und 5 bzw. 6 und 7 ersichtlich. Jede Schutzklappe ist als Biegeteil aus Metall ausgebildet, wobei an seitlichen, abgewinkelten Flügeln 9, 9' je ein Gelenknocken 7, 7' angeordnet ist. Die Gelenknocken bestehen dabei aus einer Materialdeformation. Ebenfalls ist an der Schutzklappe 6 eine Blattfeder 10 angeordnet, welche zur Ebene der Schutzklappe etwa um 15° geneigt ist. Die Blattfeder geht in zwei separate Federzungen 12, 12' über, die nur noch eine geringe Federwirkung aufweisen. Etwa in der Mitte der Schutzklappe 6 ist eine tiefgezogene Ausbuchtung 13 angeordnet.

Beim Einsetzen einer Schutzklappe in das Buchsengehäuse werden die beiden Flügel 9, 9' etwas zusammengedrückt, sodass sich die Schutzklappe 6 in ihrer Längsrichtung etwas aufbiegt. Diese Position ist in Figur 6 dargestellt. Sobald die Gelenknocken 7, 7' die Lagerpfannen 8, 8' erreicht haben, rasten sie ein und bilden dadurch die Gelenkverbindung. Die Schutzklappe 6 ist jetzt um die Schwenkachse 47 schwenkbar.

In der eingeschnappten Position stützen sich die beiden Federzungen 12, 12' am Boden 11 des Buchsengehäuses ab und pressen die Schutzklappe in die Schliessstellung (Figur 3). Als Anschlag dient dabei eine Hinterschneidung 38, die gleichzeitig auch der Verankerung des eingesteckten Steckerteils dient.

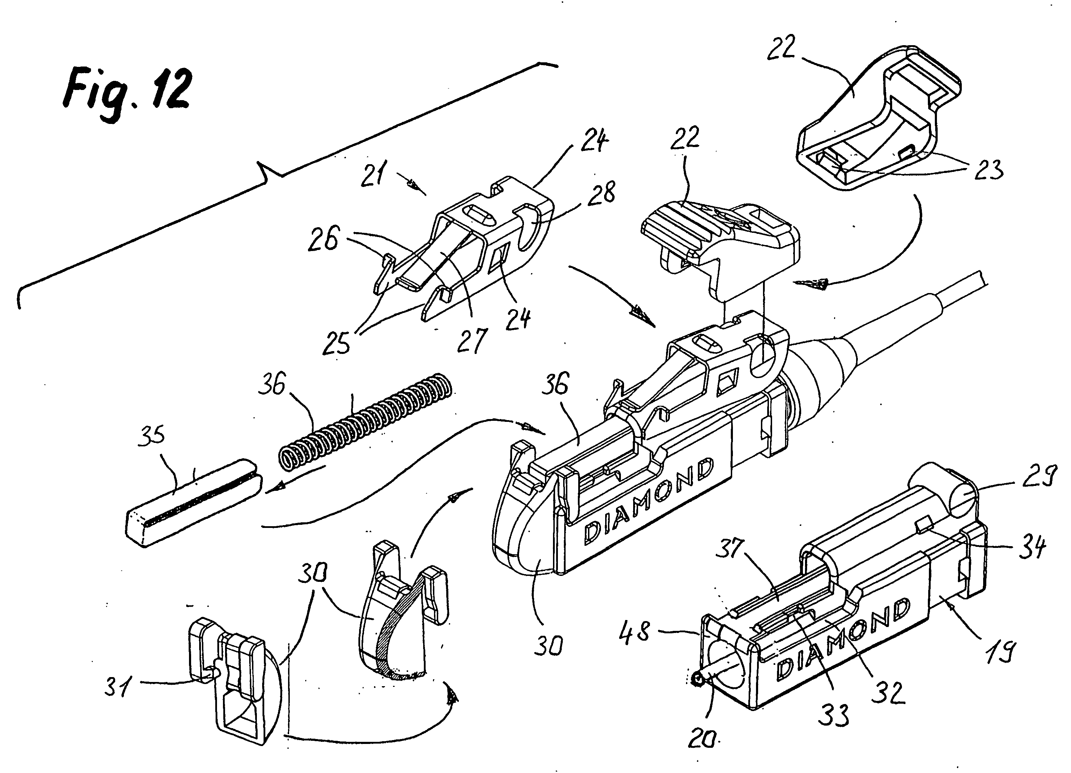

Eine erste Kategorie eines Steckerteils ist in Figur 12 etwas genauer dargestellt. Das Steckerteil besteht aus einem Steckergehäuse 19, dessen Stirnseite 48 mit einem schwenkbaren und verschiebbaren Schutzdeckel 30 abgedeckt ist. Der Schutzdeckel überdeckt dabei den etwas über die Stirnseite 48 hinausragenden Steckerstift 20. Der Schutzdeckel verfügt über ein Paar Führungs- und Gelenknocken 31, welche in Führungsbahnen 32 am Stekkergehäuse eingreifen. Die Einführung erfolgt dabei über Einführnuten 33. Die Öffnung des Schutzdeckels erfolgt über eine mechanische Steuerung beim Einsteckvorgang in das Buchsenteil.

Der Schutzdeckel 30 wird über eine Schraubendruckfeder 36 in die Schliessstellung vorgespannt, die in einem hohlen Stössel 35 gehalten ist. Dieser ist in einer Stösselführung 37 auf dem Stekkergehäuse verschiebbar.

Auf dem Steckergehäuse 19 ist ein Verriegelungselement 21 aufgeschnappt. Dazu sind seitliche Gelenknocken 29 vorgesehen, welche in Aussparungen 28 eingreifen. Das Verriegelungselement 21 hat zwei seitliche parallele Arme 25, an deren Enden Abwinklungen 26 angeordnet sind. Diese dienen als Sperrklinken, welche an den Hinterschneidungen 38 am Buchsenteil einrasten und das Steckerteil damit zugfest verriegeln. Das Verriegelungselement 21 wird dabei mit einer Blattfeder 27 in die verriegelungsstellung vorgespannt, die sich auf der Oberfläche des Steckergehäuses abstützt und zwar etwa im Bereich der beiden Abwinklungen 26. Im ausgesteckten Zustand begrenzen seitliche Anschläge 34 am Stekkergehäuse die Endstellung des Verriegelungselements.

Zur besseren manuellen Betätigung des Verriegelungselements 21 beim Aufstecken eines Steckerteils, ist ein Griffstück 22 vorgesehen, das auf das verriegelungselement aufgeschnappt ist. Das Griffstück ist dabei möglichst ergonomisch ausgestaltet und überlappt das Verriegelungselement seitlich, sodass eine gute Stabilität gewährleistet ist. Für die Schnappverbindung sind auf der Innenseite Schnappnocken 23 vorgesehen, welche hinter Kanten 24 am Verriegelungselement 21 einrasten.

Der Steckerstift 20 ist im Steckerteil axial federnd gelagert. Einzelheiten dazu können beispielsweise der eingangs erwähnten EP A 1 072 918 entnommen werden.

In den Figuren 8 bis 10 sind die Bewegungsabläufe dargestellt, die sich beim Einstecken eines Steckerteils 3 in ein Buchsenteil 2 abspielen. Aus Figur 8 ist ersichtlich, dass der erste Kontakt des Steckerteils mit der Schutzklappe 6 an der Aussenseite des Schutzdeckels 30 stattfindet. Über die ersten paar Winkelgrade wird somit die Schutzklappe 6 durch den Schutzdeckel 30 zurückgeschwenkt, der aber gleichzeitig beginnt sich zu öffnen.

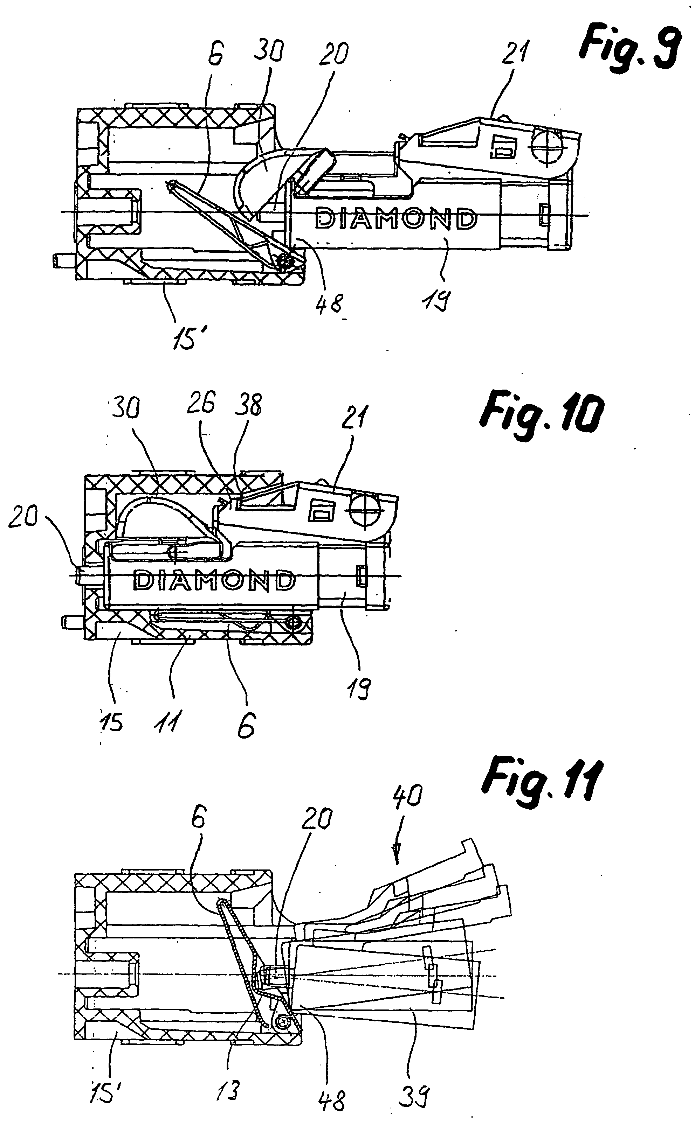

Figur 9 zeigt eine Position, bei welcher der Schutzdeckel 30 teilweise geöffnet ist und das weitere Zurückschwenken der Schutzklappe 6 an der Stirnseite 48 des Steckergehäuses 19 erfolgt. In dieser Schräglage der Schutzklappe 6 ist die Stirnseite des Steckerstifts 20 bereits in einem bestimmten Abstand von der Ebene der Schutzklappe entfernt.

Bei der in Figur 10 dargestellten Position ist die Endstellung des Steckerteils erreicht, in welcher die Abwinklungen 26 an den Hinterschneidungen 38 einrasten. Der Schutzdeckel 30 ist um 90° aufgeschwenkt und relativ zur Stirnseite 48 des Steckergehäuses 19 zurückgezogen. Der Steckerstift 20 dringt jetzt in die Zentrierhülse 14 (Figur 3) ein. Die Schutzklappe 6 ist jetzt völlig zurückgeschwenkt und verläuft etwa parallel zum Boden 11 des Buchsengehäuses.

In Figur 11 ist der Einsteckvorgang für eine zweite Kategorie von Steckerteil 40 angedeutet, dessen Steckergehäuse 39 an der Stirnseite nicht mit einem Schutzdeckel abgedeckt ist. Der Stekkerstift 20 ragt somit ungeschützt über die Stirnseite hinaus und würde beim Beginn des Einsteckvorgangs mit der Schutzklappe 6 kollidieren. Dies wird jedoch durch die Ausbuchtung 13 verhindert, sodass die Schutzklappe 6 von Anfang an nur von der Stirnseite 48 des Steckergehäuses 39 berührt wird, welche breiter ist als die Ausbuchtung 13.

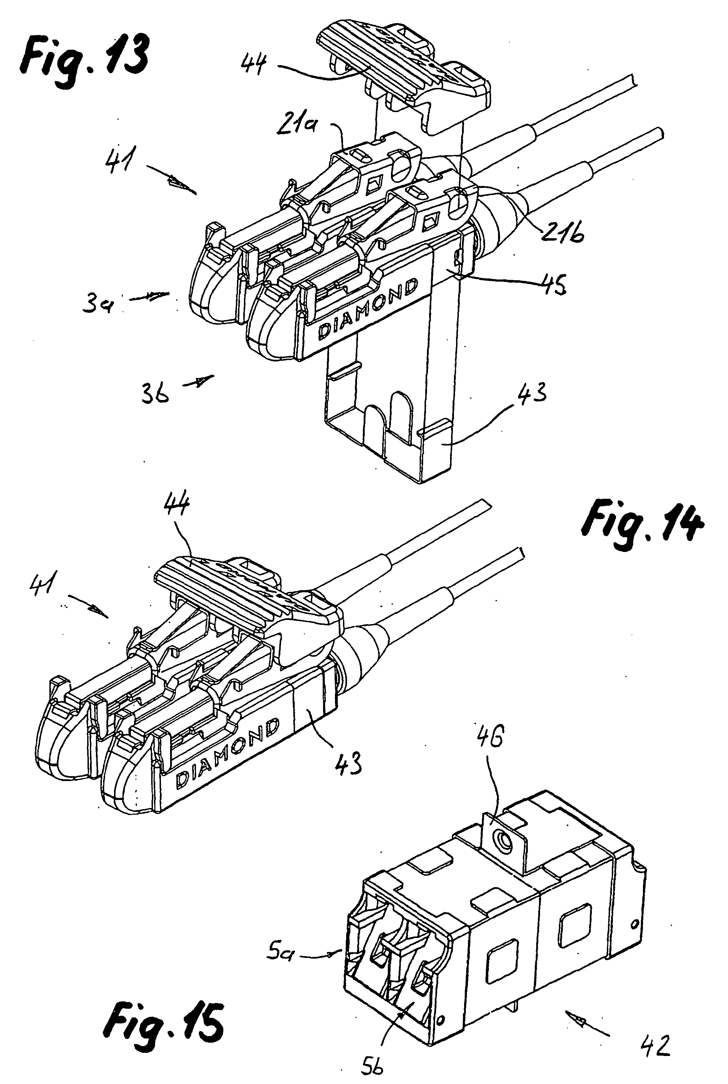

Die Figuren 13 bis 15 zeigen schliesslich noch eine Möglichkeit einer optischen Duplex-Steckverbindung. Zwei wie vorgehend beschriebene Steckerteile 3a und 3b werden zu diesem Zweck mit Hilfe eines Verbindungsbügels 43 zu einem Duplexsteckerteil 41 verbunden. Der Verbindungsbügel kann dabei seitlich an einem Kragen 45 eingeschnappt werden. Die Steckerteile 3a und 3b sind parallel zueinander auf Distanz gehalten, können sich aber doch noch geringfügig in verschiedenen Raumachsen bewegen. Über die beiden Verriegelungselemente 21a und 21b wird j'etzt ein gemeinsames Doppelgriffstück 44 aufgeschnappt, sodass letztlich eine gemeinsame Betätigung bzw. Entriegelung der beiden Steckerteile möglich ist (Figur 14).

Für ein derartiges Duplex-Steckerteil ist ein besonderes Duplex-Buchsenteil 42 vorgesehen, das jedoch ähnlich aufgebaut ist, wie das Buchsenteil gemäss Figur 2. Als alternative Befestigungsform an einer Gehäusewand ist hier ein schraubbarer Befestigungsbügel 46 dargestellt.

## Patentansprüche

1. Steckerteil (3) für eine optische Steckverbindung (1) mit einem Steckergehäuse (19), in dem wenigstens ein Steckerstift (20) gehalten ist und mit wenigstens einem, auf das Steckergehäuse aufgeschnappten, federnden Verriegelungselement (21) zum zugfesten Verriegeln des Steckerteils (3) in einem Buchsenteil (2), beim Erreichen der endgültigen Einsteckposition, wobei das Verriegelungselement schwenkbar am Steckerteil befestigt ist, **dadurch gekennzeichnet, dass** ein separates Griffstück (22) auf das Verriegelungselement (21) aufgeschnappt ist, wobei das Griffstück das Verriegelungselement beidseitig seitlich überlappt.

2. Steckerteil nach Anspruch 1, **dadurch gekennzeichnet, dass** das Verriegelungselement (21) als Biegeteil aus Metall und das Griffstück (22) aus Kunststoffmaterial ausgebildet ist.

3. Steckerteil nach Anspruch 2, **dadurch gekennzeichnet, dass** das Griffstück (22) an seitlichen Schnappnocken (23) hinter Kanten (24) des Verriegelungselements verankert ist, wobei die Schnappnocken im Überlappungsbereich auf der Innenseite des Griffstücks angeordnet sind.

4. Steckerteil nach einem der Ansprüche 1 bis 3, **dadurch gekennzeichnet, dass** das Verriegelungselement (21) an seitlichen Gelenknocken (29) am Steckergehäuse aufgeschnappt ist, welche in Aussparungen (28) am Verriegelungselement eingreifen, und das letzteres zwei sich seitlich entlang dem Steckergehäuse (19) erstreckende, parallele Arme (25) aufweist, an deren Enden Sperrklinken (26) angeordnet sind, welche an Hinterschneidungen am Buchsenteil einrastbar sind.

5. Steckerteil nach Anspruch 4, **dadurch gekennzeichnet, dass** das Verriegelungselement einstückig mit einer Blattfeder (27) versehen ist, die sich zwischen den parallelen Armen (25), vorzugsweise im Bereich der beiden Sperrklinken (26) am Steckergehäuse abstützt.

6. Steckerteil **dadurch gekennzeichnet, dass** wenigstens zwei Steckerteile (3a, 3b) nach einem der Ansprüche 1 bis 5, mit einem Verbindungselement (43) in einer etwa parallel nebeneinander verlaufenden Lage zusammengehalten sind und dass die auf die Verriegelungselemente der beiden Steckerteile aufgeschnappten Griffstücke einstückig als ein gemeinsames Griffstück (44) ausgebildet sind.

7. Optische Steckverbindung bestehend aus einem Steckerteil nach einem der Ansprüche 1 bis 6 und einem Buchsenteil (2), wobei das Buchsenteil ein Buchsengehäuse (4) mit wenigstens einer Einstecköffnung (5) aufweist, die mittels einer schwenkbaren, durch die Kraft einer Schliessfeder in Schliessstellung gehaltenen Schutzklappe (6) verschlossen ist, **dadurch gekennzeichnet, dass** die Schutzklappe ein Biegeteil aus Metall ist, das gelenkig am Buchsengehäuse eingeschnappt ist.

8. Steckverbindung nach Anspruch 7, **dadurch gekennzeichnet, dass** die Schutzklappe (6) an einem Gelenklager angelenkt ist, das ein Paar Gelenknocken (7, 7') und Gelenkpfannen (8, 8') aufweist.

9. Steckverbindung nach Anspruch 8, **dadurch gekennzeichnet, dass** die Gelenknocken (7, 7') an seitlichen, zur Ebene der Schutzklappe (6) abgewinkelten Flügeln (9, 9') angeordnet sind und dass die Gelenkpfannen (8, 8') durch Öffnungen im Buchsengehäuse (4) gebildet werden.

10. Steckverbindung nach einem der Ansprüche 7 bis 9, **dadurch gekennzeichnet, dass** die Schliessfeder eine einstückig mit der Schutzklappe (6) ausgebildete Blattfeder (10) ist, die sich am Boden (11) des Buchsengehäuses (4) abstützt.

11. Steckverbindung nach Anspruch 10, **dadurch gekennzeichnet, dass** die Blattfeder (10) wenigstens im Bereich der Abstützung in zwei separate Federzungen (12, 12') aufgeteilt ist.

12. Steckverbindung nach Anspruch 10 oder 11, **dadurch gekennzeichnet, dass** die entspannte Blattfeder in einem Winkel von 10° bis 20° zur Schutzklappe geneigt ist und dass die Abstützung nahe der Schwenkachse (47) des Gelenklagers erfolgt.

13. Steckverbindung nach einem der Ansprüche 7 bis 12, **dadurch gekennzeichnet, dass** am Steckerteil der Steckerstift über die Stirnseite des Steckergehäuses hinausragt und, dass zur Vermeidung einer Kollision mit dem Steckerstift beim Einstecken des Steckerteils in das Buchsenteil in der Schutzklappe (6) eine gegen das Innere des Buchsengehäuses gerichtete Ausbuchtung (13) angeordnet ist.

14. Steckverbindung nach Anspruch 13, **dadurch gekennzeichnet, dass** die Ausbuchtung breiter ist als der Durchmesser des Steckerstifts (20), jedoch schmaler als die Stirnseite des Steckergehäuses (19).

## Claims

1. Plug part (3) for an optical plug connection (1) having a plug housing (19) in which at least one plug pin (20) is held and having at least one sprung locking element (21), which is snapped onto the plug housing, for locking the plug part (3) in a socket part (2) such that it is resistant to tension, on reaching the final inserted position, with the locking element being attached to the plug part such that it can pivot, **characterized in that** a separate grip (22) is snapped onto the locking element (21), with the grip overlapping the locking element on both sides.

2. Plug part according to Claim 1, **characterized in that** the locking element (21) is in the form of a bent metal part and the grip (22) is formed from plastic material.

3. Plug part according to Claim 2, **characterized in that** the grip (22) is anchored on side snap-action studs (23) behind edges (24) of the locking element, with the snap-action studs being arranged in the overlap area on the inside of the grip.

4. Plug part according to one of Claims 1 to 3, **characterized in that** the locking element (21) is snapped onto side hinge studs (29) on the plug housing, which engage in cutouts (28) on the locking element, and the latter has two parallel arms (25) which extend at the sides along the plug housing (19) and at whose ends locking catches (26) are arranged, which can be latched onto undercuts on the socket part.

5. Plug part according to Claim 4, **characterized in that** the locking element is provided integrally with a leaf spring (27), which is supported between the parallel arms (25), preferably in the area of the two locking catches (26) on the plug housing.

6. Plug part according to one of Claims 1 to 5, **characterized in that** at least two plug parts (3a, 3b) are held together by means of a connecting element (43) in a position in which they run approximately parallel alongside one another, and **in that** the grips which are snapped onto the locking elements of the two plug parts are formed integrally as a common grip (44).

7. Optical plug connection comprising a plug part according to one of Claims 1 to 6 and a socket part (2), with the socket part having a socket housing (4) with at least one insertion opening (5), which is closed by means of a protective flap (6) which can pivot and is held in the closed position by the force of a closing spring, **characterized in that** the protective flap is a bent metal part, which is snapped in an articulated manner in or on the socket housing.

8. Plug connection according to Claim 7, **characterized in that** the protective flap (6) is articulated on a hinged bearing which has a pair of hinge studs (7, 7') and hinge receptacles (8, 8').

9. Plug connection according to Claim 8, **characterized in that** the hinge studs (7, 7') are arranged on side vanes (9, 9') which are at an angle to the plane of the protective flap (6), and **in that** the hinge receptacles (8, 8') are formed by openings in the socket housing (4).

10. Plug connection according to one of Claims 7 to 9, **characterized in that** the closing spring is a leaf spring (10) which is formed integrally with the protective flap (6) and is supported on the base (11) of the socket housing (4).

11. Plug connection according to Claim 10, **characterized in that** the leaf spring (10) is split into two separate spring tongues (12, 12'), at least in the area of the support.

12. Plug connection according to Claim 10 or 11, **characterized in that** the unstressed leaf spring is inclined at an angle of 10° to 20° with respect to the protective flap, and **in that** the support is provided close to the pivoting axis (47) of the hinged bearing.

13. Plug connection according to one of Claims 7 to 12, **characterized in that** the plug pin on the plug part projects beyond the end face of the plug housing, and **in that** an outward bulge (13), which points towards the interior of the socket housing, is arranged in the protective flap (6) in order to prevent a collision with the plug pin during insertion of the plug part into the socket part.

14. Plug connection according to Claim 13, **characterized in that** the outward bulge is broader than the diameter of the plug pin (20), but is narrower than the end face of the plug housing (19).

## Revendications

1. Elément formant connecteur (3) pour une connexion enfichable optique (1), comportant une enveloppe de connecteur (19) contenant au moins une broche (20), et au moins un élément de verrouillage à ressort (21) qui est enclenché sur l'enveloppe de connecteur et qui est destiné au verrouillage résistant à la traction de l'élément formant connecteur (3) dans un élément formant douille (2) une fois que la position d'enfichage définitive est atteinte, l'élément de verrouillage étant fixé, pivotant, à l'élément formant connecteur, **caractérisé en ce qu'**une poignée séparée (22) est enclenchée sur l'élément de verrouillage (21), cette poignée recouvrant des deux côtés, latéralement, l'élément de verrouillage.

2. Elément formant connecteur selon la revendication 1, **caractérisé en ce que** l'élément de verrouillage (21) est conçu comme une pièce pliée en métal et la poignée (22) est en matière plastique.

3. Elément formant connecteur selon la revendication 2, **caractérisé en ce que** la poignée (22) est ancrée derrière des bords (24) de l'élément de verrouillage au niveau de saillies d'enclenchement latérales (23), les saillies d'enclenchement étant disposées dans la zone de recouvrement, sur le côté intérieur de la poignée.

4. Elément formant connecteur selon l'une des revendications 1 à 3, **caractérisé en ce que** l'élément de verrouillage (21) est enclenché sur l'enveloppe de connecteur au niveau de saillies d'articulation latérales (29) qui pénètrent dans des évidements (28) de l'élément de verrouillage, et **en ce que** ce dernier présente deux bras parallèles (25) qui s'étendent latéralement le long de l'enveloppe de connecteur (19) et aux extrémités desquels sont disposés des cliquets d'arrêt (26) qui sont aptes à s'encliqueter dans des contre-dépouilles de l'élément formant douille.

5. Elément formant connecteur selon la revendication 4, **caractérisé en ce que** l'élément de verrouillage est pourvu d'un ressort à lame (27) réalisé d'une seule pièce, qui s'appuie contre l'enveloppe de connecteur entre les bras parallèles (25), de préférence dans la zone des deux cliquets d'arrêt (26).

6. Elément formant connecteur **caractérisé en ce qu'**au moins deux éléments formant connecteurs (3a, 3b) selon l'une des revendications 1 à 5 sont réunis à l'aide d'un élément de liaison (43) dans une position où ils sont juxtaposés à peu près parallèlement, et **en ce que** les poignées enclenchées sur les éléments de verrouillage des deux éléments formant connecteurs sont conçues d'une seule pièce comme une poignée commune (44).

7. Connexion enfichable optique composée d'un élément formant connecteur selon l'une des revendications 1 à 6 et d'un élément formant douille (2), l'élément formant douille comportant une enveloppe de douille (4) avec au moins une ouverture d'enfichage (5) qui est fermée à l'aide d'un volet de protection pivotant (6) maintenu en position fermée par la force d'un ressort de fermeture, **caractérisée en ce que** le volet de protection est constitué par une pièce pliée en métal qui est enclenchée de manière articulée sur l'enveloppe de douille.

8. Connexion enfichable selon la revendication 7, **caractérisée en ce que** le volet de protection (6) est articulé sur un appui articulé qui comprend deux saillies d'articulation (7, 7') et deux cavités d'articulation (8, 8').

9. Connexion enfichable selon la revendication 8, **caractérisée en ce que** les saillies d'articulation (7, 7') sont disposées sur des ailes latérales (9, 9') coudées par rapport au plan du volet de protection (6) et **en ce que** les cavités d'articulation (8, 8') sont formées par des ouvertures de l'enveloppe de douille (4).

10. Connexion enfichable selon l'une des revendications 7 à 9, **caractérisée en ce que** le ressort de fermeture est constitué par un ressort à lame (10) qui est formé d'une seule pièce avec le volet de protection (6) et qui s'appuie sur le fond (11) de l'enveloppe de douille (4).

11. Connexion enfichable selon la revendication 10, **caractérisée en ce que** le ressort à lame (10), au moins dans la zone de l'appui, est divisé en deux lames flexibles séparées (12, 12').

12. Connexion enfichable selon la revendication 10 ou 11, **caractérisée en ce que** le ressort à lame, quand il est détendu, est incliné suivant un angle de 10° à 20° par rapport au volet de protection et **en ce que** l'appui se fait près du pivot (47) de l'articulation.

13. Connexion enfichable selon l'une des revendications 7 à 12, **caractérisée en ce que** sur l'élément formant connecteur, la broche dépasse du côté frontal de l'enveloppe de connecteur et **en ce que** pour éviter une collision avec la broche lors de l'enfichage de l'élément formant connecteur dans l'élément formant douille, il est prévu dans le volet de protection (6) une partie en creux (13) dirigée vers l'intérieur de l'enveloppe de douille.

14. Connexion enfichable selon la revendication 13, **caractérisée en ce que** la partie en creux est plus large que le diamètre de la broche (20), mais plus étroite que le côté frontal de l'enveloppe de connecteur (19).
